# EUROPEAN PATENT SPECIFICATION

(11) **EP 1 747 721 B1**
(45) Date of publication and mention of the grant of the patent: **27.08.2008**
(21) Application number: 06253738.6
(22) Date of filing: 17.07.2006
(51) Int. Cl.: A01K 39/01

(54) **Bird feeder accessory**
Spender für Vogelfutter
Appareil pour l'alimentation des oiseaux

(30) Priority: 28.07.2005 GB 0515493
(43) Date of publication of application: 31.01.2007
(73) Proprietor: C J Wildbird Foods Limited, Shrewsbury SY4 4UR (GB)
(72) Inventor: Nock, Robert Kenneth, Mellieha MLH 04 (MT)
(74) Representative: Barnfather, Karl Jon

(56) References cited:
- US-A- 2 518 549
- US-A- 4 434 745
- US-B1- 6 499 429

## Description

The present invention relates to a bird feeder and in particular a feeder for use with blocks of food.

Frames and cages are known for use with birdfood in block form; for example suet block feeders. An aim of the present invention is to provide an improved birdfeder cage of this type. US-A-6499429 discloses a bell shaped birdfeeder comprising two cage members that are pivotally connected.

In a first aspect, the invention comprises a cage birdfeeder as defined by the features of claim 1.

Preferably, the first and/or second cage member is non-planar in shape. The first and second cage members may be substantially rectangular in at least one plane. Preferably, the first and second cage members are the same shape. More preferably, the first and second cage members are identical. This reduces production cost.

One or both of the cage members may have a hinge loop configured to pivotally engage the other cage member. Preferably, each cage member has an identical hinge loop. Preferably at least part of the birdfeeder is made of wire. Preferably, the cage member presents a wire grid the grid spacing being in the range 10 to 30 mm and more preferably 15 to 35 mm.

Preferably, the first and second cage members each have a rim where in use the intermediate portion engages the rim of both cage members; thereby to keep the birdfeeder in a closed position. More preferably, when in a first position the closer hanger allows the first and second cage members to pivot open to present a mouth for charging and when in a closed position prevent such opening.

An embodiment of the invention will now be described by reference to the following diagrammatic illustrations in which:
Figure 1 shows a front/back views of a feeder according to the invention;
Figure 2 shows a side view of the feeder of Figure 1 in the closed and hanging position;
Figure 3 shows a side view of the feeder of Figure 1 in the open position for filing:
Figure 4 shows a perspective view of the hanger portion of the feeder of Figure 1; and
Figure 5 shows a perspective view of one of the pair of wire cages for the feeder of Figure 1.

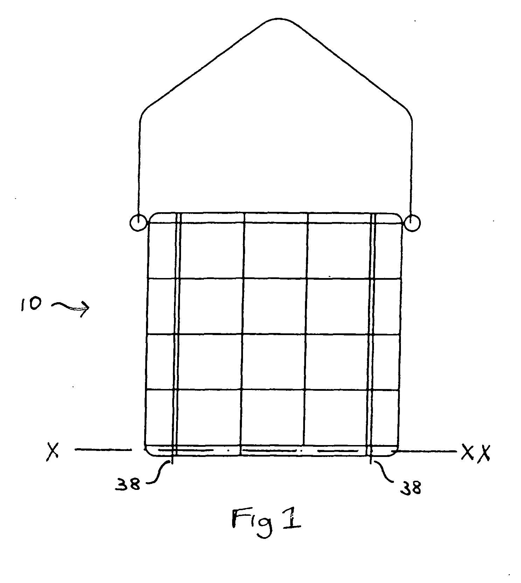

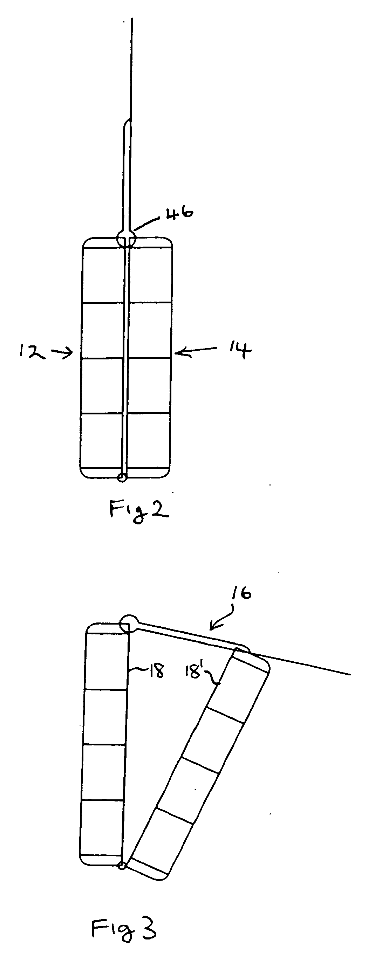

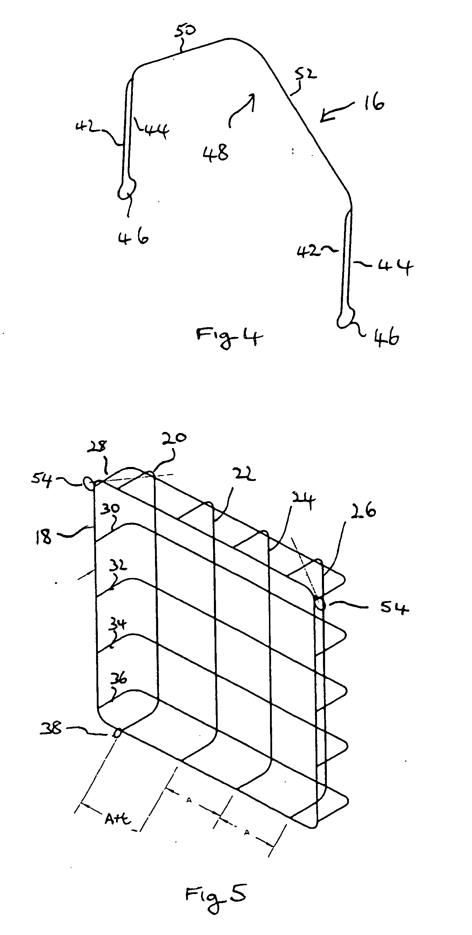

A first embodiment of a birdfeeder food block cage according to the invention is illustrated in Figures 1 to 5. The birdfeeder 10 comprises front and rear cage members 12, 14 (see Figures 2 and 3) and a hanger 16 (see Figure 4) that also serves as a latch. Cage members 12 and 14 are preferably identical and pivot relative to each other about a pivot axis X-XX (see Figure 1).

Figure 5 shows a perspective view of the cage member 12,14. Cage member 12,14 comprises rims 18 and 18' respectively that are generally rectangular in shape and made of wire. Attached to the upper and lower portions of each rim 18 are four U-shaped elements 20, 22, 24 and 26 and attached to the side portions of rim 18 are five U-shaped elements 28, 30, 32, 34 and 36. These elements are located at right angles to elements 20, 22, 24 and 26 to form a grid; the distance between adjacent grid elements is generally 10 to 30 mm and preferably about 25 mm. While the grid illustrated in the figures has substantially square apertures these apertures may also be rectangular. The distance between outer horizontal grid element 20 and adjacent vertical grid element 22 is slightly greater; thus if the normal grid spacing is A mm the spacing between elements 20 and 22 is (A+t) mm; where t (mm) is the thickness of the wire used to form the grid (see Figure 5). A hinge loop 38 is located on the lower portion of rim 18 adjacent the joint between rim 18 and vertical grid element 20. Before assembly hinge loop 38 may take the form of a split ring or the like. During assembly of two identical cage members to form a hinged pair; the lower rim portion of one of the cage member pairs is passed through the split in the hinge loop 38 of the other cage member and the loops 38 are located outermost (see Figure 1). In this way the two cage members are hinged together so that cage member 14 may pivot relative to cage member 12, and advantageously, little or no axial movement of one cage member relative to the other being possible; axial movement being defined as movement in the direction of pivot axis X-XX (see Figure 1).

The block feed cage further comprises a hanger 16 having a pair of linear elongate parallel wire portions 42,44; each pair being connected at a first end by an arcuate portion 46. Each elongate pair 42, 44 is held spaced apart in parallel relationship by intermediate hanger portion 48 comprising two generally linear wire arms 50, 52 extending in generally orthogonal directions and connected at the distal ends to wire portions 44. Prior to assembly the second end of wire portions 42 are unattached. During assembly, the second end of wire portions 42 are threaded through the eyes of wire loops 54; loops 54 being attached to rims 18 near the upper their two corners. Finally, after connecting loop portions 38 of each cage member 12, 14 (see above); the (free) second ends of wire portions 42 are attached to the second ends of wire portions 44. This results in two cage members 12, 14 that are hinged so that they may pivot about axis X-XX; the degree of pivotal motion being limited by hanger 16 (see Figure 3). In the (open) position illustrated in Figure 3 a food block (not shown) may be inserted between cage members 12 and 14. The cage members may then be pushed together (see Figure 2) and the hanger 16 moved from the approximately horizontal position shown in Figure 3 to the vertical position shown in Figure 2. In this vertical position the arcuate portion 46 of hanger 16 ensures that the cage members 12 and 14 remain closed as shown in Figure 2. In this position the wire cage birdfeeder may also be hung in a generally vertical plane by attaching hanger portion 48 to a tree branch or the like.

## Claims

1. A cage birdfeeder (10) comprising a first cage member (12) and a second cage member (14); the first and second cage members being pivotally connected such that when the feeder is in a closed position the first and second cage members are substantially flush with one another so forming a closed cage; and when in an open position the cage members are partly separated so presenting a filling mouth; **characterised in** further comprising a closer/hanger (16) having a pair of generally linear elongate arms (42, 44) that are mutually parallel and are connected to each other at a first end, by an intermediate portion (46); the degree of pivotal motion of the cage members being limited by hanger (16); in use such pivotal motion being presented when the hanger is in the vertical position by virtue of the intermediate portion (46) ensuring that the cage members (12, 14 remain closed.

2. A birdfeeder according to Claim 1 wherein the first and/or second cage member (12, 14) is non-planar in shape.

3. A birdfeeder according to Claim 1 or 2 wherein the first and second cage members (12, 14) are substantially rectangular in at least one plane.

4. A birdfeeder according to any preceding claim wherein the first and second cage members (12,14) are the same shape.

5. A birdfeeder according to Claim 4 wherein the first and second cage members (12, 14) are identical.

6. A birdfeeder according to any preceding claim wherein each cage member has a hinge loop (38) configured to pivotally engage the other cage member.

7. A birdfeeder according to any preceding claim made at least partly of wire.

8. A birdfeeder according to any preceding claim wherein a cage member presents a wire grid the grid spacing being in the range 10 to 30 mm.

9. A birdfeeder according to any preceding claim wherein the first and second cage members each (12, 14) have a rim (18) and where in use the intermediate portion (46) engages the rim of both cage members.

10. A birdfeeder according to any preceding claim wherein when in the open position the hanger (16) allows the first and second cage members to pivot open to present a mouth for charging and when in the closed position prevent such opening.

## Patentansprüche

1. Käfig-Vogelfutterspender (10), der ein erstes Käfigelement (12) und ein zweites Käfigelement (14) umfasst, wobei das erste und das zweite Käfigelement derart schwenkbar miteinander verbunden sind, dass wenn sich der Futterspender in einer geschlossenen Position befindet, das erste und das zweite Käfigelement im Wesentlichen bündig miteinander sind, so dass sie einen geschlossenen Käfig bilden, und dass wenn er sich in einer geöffneten Position befindet, die Käfigelemente teilweise getrennt sind, so dass sie eine Einfüllmündung präsentieren, **dadurch gekennzeichnet, dass** er darüber hinaus einen Schließer/Aufhänger (16) umfasst, der ein Paar von im Allgemeinen linearen, länglichen Armen (42, 44) aufweist, die gegenseitig parallel sind und an einem ersten Ende durch ein Zwischenteil (46) miteinander verbunden sind, ferner der Grad der Schwenkbewegung der Käfigelemente durch den Aufhänger (16) begrenzt wird, ferner solch eine Schwenkbewegung bei Gebrauch verhindert wird, wenn sich der Aufhänger in der vertikalen Position befindet, aufgrund des Zwischenteils (46), das sicherstellt, dass die Käfigelemente (12, 14) geschlossen bleiben.

2. Vogelfutterspender nach Anspruch 1, wobei das erste und/oder das zweite Käfigelement (12, 14) eine nicht planare Form aufweist.

3. Vogelfutterspender nach Anspruch 1 oder 2, wobei das erste und das zweite Käfigelement (12, 14) in wenigstens einer Ebene im Wesentlichen rechtwinklig sind.

4. Vogelfutterspender nach einem der vorherigen Ansprüche, wobei das erste und das zweite Käfigelement (12, 14) die gleiche Form aufweisen.

5. Vogelfutterspender nach Anspruch 4, wobei das erste und das zweite Käfigelement (12, 14) identisch sind.

6. Vogelfutterspender nach einem der vorherigen Ansprüche, wobei jedes Käfigelement eine Scharnieröse (38) aufweist, die zum schwenkbaren Eingriff in das andere Käfigelement vorgesehen ist.

7. Vogelfutterspender nach einem der vorherigen Ansprüche, der wenigstens teilweise aus Draht gefertigt ist.

8. Vogelfutterspender nach einem der vorherigen Ansprüche, wobei ein Käfigelement ein Drahtgitter darstellt, wobei der Drahtgitterabstand im Bereich von 10 bis 30 mm liegt.

9. Vogelfutterspender nach einem der vorherigen Ansprüche, wobei das erste und das zweite Käfigelement (12, 14) jeweils eine Randkante (18) aufweisen und wobei der Mittelteil (46) im Gebrauch mit der Randkante beider Käfigelemente in Eingriff kommt.

10. Vogelfutterspender nach einem der vorherigen Ansprüche, wobei, wenn er sich in der geöffneten Position befindet, der Aufhänger (16) ermöglicht, dass das erste und das zweite Käfigelement zum Öffnen geschwenkt werden, so dass eine Mündung zur Beladung präsentiert wird, und wenn er sich in der geschlossenen Position befindet, solch eine Öffnung verhindert.

## Revendications

1. Appareil d'alimentation à cage (10) pour oiseaux, comprenant un premier élément de cage (12) et un second élément de cage (14) ; le premier et le second éléments de cage étant reliés de façon pivotante de telle sorte que quand l'appareil d'alimentation est dans une position fermée, le premier et le second éléments de cage sont sensiblement affleurants l'un avec l'autre, formant ainsi une cage fermée ; et quand il est dans une position ouverte, les éléments de cage sont partiellement séparés, présentant ainsi une bouche de remplissage ; **caractérisé en ce qu'**il comprend également un dispositif de fermeture/suspension (16) comprenant une paire de bras allongés généralement linéaires (42, 44) mutuellement parallèles et reliés l'un à l'autre, à une première extrémité, par une partie intermédiaire (46) ; le degré de mouvement pivotant des éléments de cage étant limité par le dispositif de suspension (16) ; pendant l'utilisation, ce mouvement pivotant étant empêché quand le dispositif de suspension est dans la position verticale grâce à la partie intermédiaire (46) garantissant que les éléments de cage (12, 14) restent fermés.

2. Appareil d'alimentation pour oiseaux selon la revendication 1, dans lequel le premier et/ou le second élément de cage (12, 14) est de forme non plane.

3. Appareil d'alimentation pour oiseaux selon la revendication 1 ou 2, dans lequel le premier et le second éléments de cage (12, 14) sont sensiblement rectangulaires dans au moins un plan.

4. Appareil d'alimentation pour oiseaux selon l'une quelconque des revendications précédentes, dans lequel le premier et le second éléments de cage (12, 14) sont de la même forme.

5. Appareil d'alimentation pour oiseaux selon la revendication 4, dans lequel le premier et le second éléments de cage (12, 14) sont identiques.

6. Appareil d'alimentation pour oiseaux selon l'une quelconque des revendications précédentes, dans lequel chaque élément de cage comprend une boucle d'articulation (38) configurée pour s'engager de façon pivotante avec l'autre élément de cage.

7. Appareil d'alimentation pour oiseaux selon l'une quelconque des revendications précédentes, constitué au moins partiellement de fil.

8. Appareil d'alimentation pour oiseaux selon l'une quelconque des revendications précédentes, dans lequel un élément de cage présente une grille en fil, l'espacement de la grille étant dans la plage de 10 à 30 mm.

9. Appareil d'alimentation pour oiseaux selon l'une quelconque des revendications précédentes, dans lequel le premier et le second éléments de cage (12, 14) comprennent chacun une bordure (18) et dans lequel pendant l'utilisation la partie intermédiaire (46) s'engage dans la bordure des deux éléments de cage.

10. Appareil d'alimentation pour oiseaux selon l'une quelconque des revendications précédentes, dans lequel, dans la position ouverte, le dispositif de suspension (16) permet au premier et au second éléments de cage de pivoter en ouverture pour présenter une bouche pour le chargement et, dans la position fermée, empêche cette ouverture.
